# FASCICULE DE BREVET EUROPEEN

(11) **EP 4 149 703 B1**
(45) Date de publication et mention de la délivrance du brevet: **22.05.2024**
(21) Numéro de dépôt: 21732447.4
(22) Date de dépôt: 10.05.2021
(51) Int. Cl.: B22F 1/05, B22F 1/00, B22F 3/105, B33Y 10/00, B33Y 70/00, C22C 1/04, C22C 21/00, B33Y 40/20, B33Y 80/00, B22F 10/28

(54) **PROCÉDÉ DE FABRICATION D'UNE PIÈCE EN ALLIAGE D'ALUMINIUM**
VERFAHREN ZUR HERSTELLUNG EINES ALUMINIUMLEGIERUNGSTEILS
METHOD FOR PRODUCING AN ALUMINIUM ALLOY PART

(30) Priorité: 13.05.2020 FR 2004723
(43) Date de publication de la demande: 22.03.2023
(73) Titulaire: C-Tec Constellium Technology Center, 38341 Voreppe (FR)
(72) Inventeur: CHEHAB, Bechir, 38500 Voiron (FR); SHAHANI, Ravi, 38340 Voreppe (FR)
(74) Mandataire: Constellium - Propriété Industrielle
(86) Numéro de dépôt international: PCT/FR2021/050800
(87) Numéro de publication internationale: WO 2021/156582

(56) Documents cités:
- WO-A1-2019/155180
- US-A- 4 989 556
- US-A1- 2014 283 651
- US-A1- 2020 063 241

## Description

### DOMAINE TECHNIQUE

Le domaine technique de l'invention est un procédé de fabrication d'une pièce en alliage d'aluminium, mettant en oeuvre une technique de fabrication additive.

### ART ANTERIEUR

Depuis les années 80, les techniques de fabrication additive se sont développées. Elles consistent à mettre en forme une pièce par ajout de matière, ce qui est à l'opposé des techniques d'usinage, qui visent à enlever de la matière. Autrefois cantonnée au prototypage, la fabrication additive est à présent opérationnelle pour fabriquer des produits industriels en série, y compris des pièces métalliques.

Le terme « fabrication additive » est défini, selon la norme française XP E67-001, comme un "ensemble des procédés permettant de fabriquer, couche par couche, par ajout de matière, un objet physique à partir d'un objet numérique". La norme ASTM F2792 (janvier 2012) définit également la fabrication additive. Différentes modalités de fabrication additive sont aussi définies et décrites dans la norme ISO/ASTM 17296-1. Le recours à une fabrication additive pour réaliser une pièce en aluminium, avec une faible porosité, a été décrit dans le document WO2015/006447. L'application de couches successives est généralement réalisée par application d'un matériau dit d'apport, puis fusion ou frittage du matériau d'apport à l'aide d'une source d'énergie de type faisceau laser, faisceau d'électrons, torche plasma ou arc électrique. Quelle que soit la modalité de fabrication additive appliquée, l'épaisseur de chaque couche ajoutée est de l'ordre de quelques dizaines ou centaines de microns.

Un moyen de fabrication additive est la fusion ou le frittage d'un matériau d'apport prenant la forme d'une poudre. Il peut s'agir de fusion ou de frittage par un faisceau d'énergie.

On connait notamment les techniques de frittage sélectif par laser (selective laser sintering, SLS ou direct métal laser sintering, DMLS), dans lequel une couche de poudre de métal ou d'alliage métallique est appliquée sur la pièce à fabriquer et est frittée sélectivement selon le modèle numérique avec de l'énergie thermique à partir d'un faisceau laser. Un autre type de procédé de formation de métal comprend la fusion sélective par laser (selective laser melting, SLM) ou la fusion par faisceau d'électrons (electron beam melting, EBM), dans lequel l'énergie thermique fournie par un laser ou un faisceau d'électrons dirigé est utilisée pour fondre sélectivement (au lieu de fritter) la poudre métallique afin qu'elle fusionne à mesure qu'elle refroidit et se solidifie. On connait également le dépôt par fusion laser (laser melting déposition, LMD) dans lequel la poudre est projetée et fondue par un faisceau laser de façon simultanée.

La demande de brevet WO2016/209652 décrit un procédé pour fabriquer un aluminium à haute résistance mécanique comprenant : la préparation d'une poudre d'aluminium atomisée ayant une ou plusieurs tailles de poudre approximative désirée et une morphologie approximative ; le frittage de la poudre pour former un produit par fabrication additive ; la mise en solution ; la trempe ; et le revenu de l'aluminium fabriqué de façon additive.

Il existe une demande grandissante d'alliages d'aluminium à haute résistance et utilisables à haute température pour l'application SLM. Les alliages 4xxx (principalement Al10SiMg, Al7SiMg et Al12Si) sont les alliages d'aluminium les plus matures pour l'application SLM. Ces alliages offrent une très bonne aptitude au procédé SLM mais souffrent de propriétés mécaniques limitées.

Le Scalmalloy^{®} (DE102007018123A1) développé par APWorks offre (avec un traitement thermique post-fabrication de 4h à 325°C) de bonnes propriétés mécaniques à température ambiante. Cependant cette solution souffre d'un coût élevé sous forme de poudre lié à sa teneur élevée en scandium (~ 0,7% Sc) et à la nécessité d'un processus d'atomisation spécifique. Cette solution souffre également de mauvaises propriétés mécaniques à haute température, par exemple à des températures supérieures à 150°C.

L'Addalloy^{™} développé par NanoAl (WO201800935A1) est un alliage Al Mg Zr. Cet alliage souffre de propriétés mécaniques limitées à haute température.

L'alliage 8009 (AI Fe V Si), développé par Honeywell (US201313801662) offre de bonnes propriétés mécaniques à l'état brut de fabrication à la fois à température ambiante et à haute température jusqu'à 350°C. L'alliage 8009 souffre cependant de problèmes de processabilité (risque de fissuration), probablement liés à sa dureté importante à l'état brut de fabrication. La demande de brevet WO 2019/155180 décrit un procédé de fabrication additive appliqué à un alliage d'aluminium comprenant : 1,5 % de Zr ; 4 %, 2 % ou 6 % de Mn ; 3 % de Ni ; 0 % ou 2 % de Cu ; le reste étant de l'aluminium.

Les propriétés mécaniques des pièces d'aluminium obtenues par fabrication additive dépendent de l'alliage formant le métal d'apport, et plus précisément de sa composition, des paramètres du procédé de fabrication additive ainsi que des traitements thermiques appliqués. Les inventeurs ont déterminé une composition d'alliage qui, utilisée dans un procédé de fabrication additive, permet d'obtenir des pièces ayant des caractéristiques remarquables. En particulier, les pièces obtenues selon la présente invention ont des caractéristiques améliorées par rapport à l'art antérieur, notamment en termes de limite élastique à 200°C et de sensibilité à la fissuration lors du procédé SLM.

### EXPOSE DE L'INVENTION

Les inventeurs ont découvert qu'une optimisation de la teneur en Zr, éventuellement associée à une optimisation de la température de fabrication (et en particulier du plateau de fabrication), permet de :
- éliminer les problèmes de sensibilité à la fissuration ;
- contrôler la limite d'élasticité à l'état brut de fabrication ;
- améliorer la capacité de durcissement (différence de résistance mécanique à température ambiante entre l'état brut de fabrication et l'état après un traitement thermique à environ 400°C) ; et
- offrir de bonnes performances mécaniques à température ambiante et à haute température. Un premier objet de l'invention est un procédé de fabrication d'une pièce comportant une formation de couches métalliques solides successives, superposées les unes aux autres, chaque couche décrivant un motif défini à partir d'un modèle numérique, chaque couche étant formée par le dépôt d'un métal, dit métal d'apport, le métal d'apport étant soumis à un apport d'énergie de façon à entrer en fusion et à constituer, en se solidifiant, ladite couche, dans lequel le métal d'apport prend la forme d'une poudre, dont l'exposition à un faisceau énergétique résulte en une fusion suivie d'une solidification de façon à former une couche solide, le procédé étant caractérisé en ce que le métal d'apport est un alliage d'aluminium comprenant au moins les éléments d'alliage suivant:
- Zr, selon une fraction massique de 0,60 à 1,40 %, de préférence de 0,70 à 1,30 %, préférentiellement de 0,80 à 1,20 %, plus préférentiellement de 0,85 à 1,15 %; encore plus préférentiellement de 0,90 à 1,10 % ;
- Mn, selon une fraction massique de 2,00 à 5,00 %, de préférence de 3,00 à 5,00 %, préférentiellement de 3,50 à 4,50 % ;
- Ni, selon une fraction massique de 1,00 à 5,00 %, de préférence de 2,00 à 4,00 %, préférentiellement de 2,50 à 3,50 % ;
- Cu, selon une fraction massique de 1,00 à 5,00 %, de préférence de 1,00 à 3,00 %, préférentiellement de 1,50 à 2,50 % ;
- optionnellement au moins un élément choisi parmi : Hf, Cr, Ti, Er, W, Nb, Ta, Y, Yb, Nd, Ce, Co, Mo, Lu, Tm, V et/ou du mischmétal, selon une fraction massique inférieure ou égale à 5,00%, de préférence inférieure ou égale à 3,00 % chacun, et inférieure ou égale à 15,00 %, de préférence inférieure ou égale à 12,00 %, encore plus préférentiellement inférieure ou égale à 5,00 % au total ;
- optionnellement au moins un élément choisi parmi : Fe, Si, Mg, Zn, Sc, La, Sr, Ba, Sb, Bi, Ca, P, B, In et/ou Sn, selon une fraction massique inférieure ou égale à 1,00 %, de préférence inférieure ou égale à 0,50 %, préférentiellement inférieure ou égale à 0,30 %, plus préférentiellement inférieure ou égale à 0,10 %, encore plus préférentiellement inférieure ou égale à 700 ppm chacun, et inférieure ou égale à 2,00 %, de préférence inférieure ou égale à 1,00 % au total ;
- optionnellement au moins un élément choisi parmi : Ag selon une fraction massique de 0,06 à 1,00 %, Li selon une fraction massique de 0,06 à 1,00 % ;
- optionnellement des impuretés selon une fraction massique inférieure à 0,05 % chacune (soit 500 ppm) et inférieure à 0,15 % au total ;
- le reste étant de l'aluminium.

Sans être lié par la théorie, les alliages selon l'invention semblent particulièrement avantageux pour présenter un bon compromis entre la sensibilité à la fissuration et la résistance mécanique, notamment en traction.

Comme démontré dans les exemples ci-après, la quantité de Zr semble être le facteur d'influence prépondérant sur la sensibilité à la fissuration de l'alliage d'aluminium. Il est connu de l'homme du métier que d'autres éléments ont des effets équivalents à ceux du Zr. On peut citer notamment Ti, V, Sc, Hf, Er, Tm, Yb ou Lu. Ainsi, selon une variante de la présente invention, le Zr pourrait être remplacé partiellement par au moins un élément choisi parmi : Ti, V, Sc, Hf, Er, Tm, Yb et Lu, de préférence jusqu'à 90 % de la fraction massique du Zr.

Selon cette variante de la présente invention, un deuxième objet de l'invention est un procédé de fabrication d'une pièce comportant une formation de couches métalliques solides successives (20₁...20ₙ), superposées les unes aux autres, chaque couche décrivant un motif défini à partir d'un modèle numérique (M), chaque couche étant formée par le dépôt d'un métal (25), dit métal d'apport, le métal d'apport étant soumis à un apport d'énergie de façon à entrer en fusion et à constituer, en se solidifiant, ladite couche, dans lequel le métal d'apport prend la forme d'une poudre (25), dont l'exposition à un faisceau énergétique (32) résulte en une fusion suivie d'une solidification de façon à former une couche solide (20₁...20ₙ),
le procédé étant caractérisé en ce que le métal d'apport (25) est un alliage d'aluminium comprenant au moins les éléments d'alliage suivant :
- Zr et au moins un élément choisi parmi : Ti, V, Sc, Hf, Er, Tm, Yb et Lu, selon une fraction massique de 0,60 à 1,40 %, de préférence de 0,70 à 1,30 %, préférentiellement de 0,80 à 1,20 %, plus préférentiellement de 0,85 à 1,15 % ; encore plus préférentiellement de 0,90 à 1,10 % au total, sachant que Zr représente de 10 à moins de 100 % des gammes de pourcentages données ci-avant ;
- Mn, selon une fraction massique de 2,00 à 5,00 %, de préférence de 3,00 à 5,00 %, préférentiellement de 3,50 à 4,50 % ;
- Ni, selon une fraction massique de 1,00 à 5,00 %, de préférence de 2,00 à 4,00 %, préférentiellement de 2,50 à 3,50 % ;
- Cu, selon une fraction massique de 1,00 à 5,00 %, de préférence de 1,00 à 3,00 %, préférentiellement de 1,50 à 2,50 % ;
- optionnellement au moins un élément choisi parmi : Cr, W, Nb, Ta, Y, Nd, Ce, Co, Mo et/ou du mischmétal, selon une fraction massique inférieure ou égale à 5,00 %, de préférence inférieure ou égale à 3,00 % chacun, et inférieure ou égale à 15,00 %, de préférence inférieure ou égale à 12,00 %, encore plus préférentiellement inférieure ou égale à 5,00 % au total ;
- optionnellement au moins un élément choisi parmi : Fe, Si, Mg, Zn, La, Sr, Ba, Sb, Bi, Ca, P, B, In et/ou Sn, selon une fraction massique inférieure ou égale à 1,00 %, de préférence inférieure ou égale à 0,50 %, préférentiellement inférieure ou égale à 0,30 %, plus préférentiellement inférieure ou égale à 0,10 %, encore plus préférentiellement inférieure ou égale à 700 ppm chacun, et inférieure ou égale à 2,00 %, de préférence inférieure ou égale à 1,00 % au total ;
- optionnellement au moins un élément choisi parmi : Ag selon une fraction massique de 0,06 à 1,00 %, Li selon une fraction massique de 0,06 à 1,00 % ;
- optionnellement des impuretés selon une fraction massique inférieure à 0,05 % chacune (soit 500 ppm) et inférieure à 0,15 % au total ;
- le reste étant de l'aluminium.

De préférence, l'alliage selon la présente invention, en particulier selon le premier et le deuxième objets de l'invention, comprend une fraction massique d'au moins 80 %, plus préférentiellement d'au moins 85 % d'aluminium.

La fusion de la poudre peut être partielle ou totale. De préférence, de 50 à 100 % de la poudre exposée entre en fusion, plus préférentiellement de 80 à 100 %.

Chaque couche peut notamment décrire un motif défini à partir d'un modèle numérique.

Les éléments Hf, Cr, Ti, Er, W, Nb, Ta, Y, Yb, Nd, Ce, Co, Mo, Lu, Tm, V et mischmétal peuvent conduire à la formation de dispersoïdes ou de phases intermétalliques fines permettant d'augmenter la dureté du matériau obtenu. De manière connue de l'homme du métier, la composition du mischmétal est généralement d'environ 45 à 50 % de cérium, 25 % de lanthane, 15 à 20 % de néodyme et 5 % de praséodyme.

Selon un mode de réalisation, un mode de réalisation, on évite l'addition de La, Bi, Mg, Er, Yb, Y, Sc et/ou Zn, la fraction massique préférée de chacun de ces éléments étant alors inférieure à 0,05 %, et de préférence inférieure à 0,01 %.

Selon un autre mode de réalisation, on évite l'addition de Fe et/ou de Si. Cependant, il est connu de l'homme du métier que ces deux éléments sont généralement présents dans les alliages d'aluminium courants à des teneurs telles que définies ci-avant. Les teneurs telles que décrites ci-avant peuvent donc également correspondre à des teneurs d'impuretés pour Fe et Si.

Les éléments Ag et Li peuvent agir sur la résistance du matériau par précipitation durcissante ou par leur effet sur les propriétés de la solution solide.

Optionnellement, l'alliage peut également comprendre au moins un élément pour affiner les grains, par exemple AlTiC ou AITiB2 (par exemple sous forme AT5B ou AT3B), selon une quantité inférieure ou égale à 50 kg/tonne, de préférence inférieure ou égale à 20 kg/tonne, encore plus préférentiellement inférieure ou égale à 12 kg/tonne chacun, et inférieure ou égale à 50 kg/tonne, de préférence inférieure ou égale à 20 kg/tonne au total.

Selon un mode de réalisation, le procédé peut comporter, suite à la formation des couches :
- un traitement thermique typiquement à une température d'au moins 100°C et d'au plus 500°C, de préférence de 300 à 450°C ;
- et/ou une compression isostatique à chaud (CIC).

Le traitement thermique peut notamment permettre un détensionnement des contraintes résiduelles et/ou une précipitation supplémentaire de phases durcissantes.

Le traitement CIC peut notamment permettre d'améliorer les propriétés d'allongement et les propriétés en fatigue. La compression isostatique à chaud peut être réalisée avant, après ou à la place du traitement thermique.

Avantageusement, la compression isostatique à chaud est réalisée à une température de 250°C à 550°C et de préférence de 300°C à 450°C, à une pression de 500 à 3000 bars et pendant une durée de 0,5 à 10 heures.

Selon un autre mode de réalisation, adapté aux alliages à durcissement structural, on peut réaliser une mise en solution suivie d'une trempe et d'un revenu de la pièce formée et/ou une compression isostatique à chaud. La compression isostatique à chaud peut dans ce cas avantageusement se substituer à la mise en solution. Cependant le procédé selon l'invention est avantageux car il ne nécessite de préférence pas de traitement de mise en solution suivi de trempe. La mise en solution peut avoir un effet néfaste sur la résistance mécanique dans certains cas en participant à un grossissement des dispersoïdes ou des phases intermétalliques fines. Par ailleurs, sur des pièces de forme complexe, l'opération de trempe pourrait conduire à une distorsion des pièces, ce qui limiterait l'avantage premier de l'utilisation de la fabrication additive, qui est l'obtention de pièces directement dans leur forme finale ou quasi-finale. Selon un mode de réalisation, le procédé selon la présente invention comporte en outre optionnellement un traitement d'usinage, et/ou un traitement de surface chimique, électrochimique ou mécanique, et/ou une tribofinition. Ces traitements peuvent être réalisés notamment pour réduire la rugosité et/ou améliorer la résistance à la corrosion et/ou améliorer la résistance à l'initiation de fissures en fatigue.

Optionnellement, il est possible de réaliser une déformation mécanique de la pièce, par exemple après la fabrication additive et/ou avant le traitement thermique.

Optionnellement, il est possible de réaliser une opération d'assemblage avec une ou plusieurs autres pièces, par des méthodes d'assemblage connues. On peut citer par exemple comme méthode d'assemblage :
- boulonnage, rivetage ou d'autres méthodes d'assemblage mécanique ;
- soudage par fusion ;
- soudage par frottement ;
- brasage.

De préférence, la pièce est fabriquée soit à une température de 25 à 150°C, préférentiellement de 50 à 130°C, plus préférentiellement de 80 à 110°C, soit à une température de plus de 250 à moins de 350°C, préférentiellement de 280 à 330°C. Cette sélection de températures optimisées est décrite plus en détails dans les exemples ci-après. Il existe plusieurs moyens de chauffer l'enceinte de fabrication d'une pièce (et donc le lit de poudre) en fabrication additive. On peut citer par exemple l'utilisation d'un plateau de construction chauffant, ou alors un chauffage par un laser, par induction, par des lampes chauffantes ou par des résistances chauffantes qui peuvent être placées en-dessous et/ou à l'intérieur du plateau de construction, et/ou autour du lit de poudre.

Selon un mode de réalisation, le procédé peut être un procédé de construction avec un taux de dépose élevé. Le taux de dépose peut par exemple être supérieur à 4 mm³/s, de préférence supérieur à 6 mm³/s, plus préférentiellement supérieur à 7 mm³/s. Le taux de dépose est calculé comme le produit entre la vitesse de balayage (en mm/s), l'écart vecteur (en mm) et l'épaisseur de couche (en mm).

Selon un mode de réalisation, le procédé peut utiliser un laser, et optionnellement plusieurs lasers.

Un troisième objet de l'invention est une pièce métallique, obtenue par un procédé selon le premier ou le deuxième objet de l'invention.

Un quatrième objet de l'invention est une poudre comprenant, de préférence consistant en, un alliage d'aluminium comprenant au moins les éléments d'alliage suivant :
- Zr, selon une fraction massique de 0,60 à 1,40 %, de préférence de 0,70 à 1,30 %, préférentiellement de 0,80 à 1,20 %, plus préférentiellement de 0,85 à 1,15 %; encore plus préférentiellement de 0,90 à 1,10 % ;
- Mn, selon une fraction massique de 2,00 à 5,00 %, de préférence de 3,00 à 5,00 %, préférentiellement de 3,50 à 4,50 % ;
- Ni, selon une fraction massique de 1,00 à 5,00 %, de préférence de 2,00 à 4,00 %, préférentiellement de 2,50 à 3,50 % ;
- Cu, selon une fraction massique de 1,00 à 5,00 %, de préférence de 1,00 à 3,00 %, préférentiellement de 1,50 à 2,50 % ;
- optionnellement au moins un élément choisi parmi : Hf, Cr, Ti, Er, W, Nb, Ta, Y, Yb, Nd, Ce, Co, Mo, Lu, Tm, V et/ou du mischmétal, selon une fraction massique inférieure ou égale à 5,00 %, de préférence inférieure ou égale à 3,00 % chacun, et inférieure ou égale à 15,00 %, de préférence inférieure ou égale à 12,00 %, encore plus préférentiellement inférieure ou égale à 5,00 % au total ;
- optionnellement au moins un élément choisi parmi : Fe, Si, Mg, Zn, Sc, La, Sr, Ba, Sb, Bi, Ca, P, B, In et/ou Sn, selon une fraction massique inférieure ou égale à 1,00 %, de préférence inférieure ou égale à 0,50 %, préférentiellement inférieure ou égale à 0,30 %, plus préférentiellement inférieure ou égale à 0,10 %, encore plus préférentiellement inférieure ou égale à 700 ppm chacun, et inférieure ou égale à 2,00 %, de préférence inférieure ou égale à 1,00 % au total ;
- optionnellement au moins un élément choisi parmi : Ag selon une fraction massique de 0,06 à 1,00 %, Li selon une fraction massique de 0,06 à 1,00 % ;
- optionnellement des impuretés selon une fraction massique inférieure à 0,05 % chacune (soit 500 ppm) et inférieure à 0,15 % au total ;
- le reste étant de l'aluminium.

Un cinquième objet de l'invention est une poudre comprenant, de préférence consistant en, un alliage d'aluminium comprenant au moins les éléments d'alliage suivant :
- Zr et au moins un élément choisi parmi : Ti, V, Sc, Hf, Er, Tm, Yb et Lu, selon une fraction massique de 0,60 à 1,40 %, de préférence de 0,70 à 1,30 %, préférentiellement de 0,80 à 1,20 %, plus préférentiellement de 0,85 à 1,15 % ; encore plus préférentiellement de 0,90 à 1,10 % au total, sachant que Zr représente de 10 à moins de 100 % des gammes de pourcentages données ci-avant ;
- Mn, selon une fraction massique de 2,00 à 5,00 %, de préférence de 3,00 à 5,00 %, préférentiellement de 3,50 à 4,50 % ;
- Ni, selon une fraction massique de 1,00 à 5,00 %, de préférence de 2,00 à 4,00 %, préférentiellement de 2,50 à 3,50 % ;
- Cu, selon une fraction massique de 1,00 à 5,00 %, de préférence de 1,00 à 3,00 %, préférentiellement de 1,50 à 2,50 % ;
- optionnellement au moins un élément choisi parmi : Cr, W, Nb, Ta, Y, Nd, Ce, Co, Mo et/ou du mischmétal, selon une fraction massique inférieure ou égale à 5,00 %, de préférence inférieure ou égale à 3,00 % chacun, et inférieure ou égale à 15,00 %, de préférence inférieure ou égale à 12,00 %, encore plus préférentiellement inférieure ou égale à 5,00 % au total ;
- optionnellement au moins un élément choisi parmi : Fe, Si, Mg, Zn, La, Sr, Ba, Sb, Bi, Ca, P, B, In et/ou Sn, selon une fraction massique inférieure ou égale à 1,00 %, de préférence inférieure ou égale à 0,50 %, préférentiellement inférieure ou égale à 0,30 %, plus préférentiellement inférieure ou égale à 0,10 %, encore plus préférentiellement inférieure ou égale à 700 ppm chacun, et inférieure ou égale à 2,00 %, de préférence inférieure ou égale à 1,00 % au total ;
- optionnellement au moins un élément choisi parmi : Ag selon une fraction massique de 0,06 à 1,00 %, Li selon une fraction massique de 0,06 à 1,00 % ;
- optionnellement des impuretés selon une fraction massique inférieure à 0,05 % chacune (soit 500 ppm) et inférieure à 0,15 % au total ;
- le reste étant de l'aluminium.

Ce cinquième objet de l'invention correspond à une variante du quatrième objet de l'invention, selon laquelle on utilise au moins un élément choisi parmi : Ti, V, Sc, Hf, Er, Tm, Yb et Lu, en remplacement partiel du Zr, de préférence jusqu'à 90 % de la fraction massique du Zr.

De préférence, l'alliage de la poudre selon la présente invention comprend une fraction massique d'au moins 80 %, plus préférentiellement d'au moins 85 % d'aluminium.

L'alliage d'aluminium de la poudre selon la présente invention peut également comprendre l'une des options suivantes, seules ou en combinaison :
- On évite l'addition de La, Bi, Mg, Er, Yb, Y, Sc et/ou Zn, la fraction massique préférée de chacun de ces éléments étant alors inférieure à 0,05 %, et de préférence inférieure à 0,01 % ; et/ou
- On évite l'addition de Fe et/ou de Si. Cependant, il est connu de l'homme du métier que ces deux éléments sont généralement présents dans les alliages d'aluminium courants à des teneurs telles que définies ci-avant. Les teneurs telles que décrites ci-avant peuvent donc également correspondre à des teneurs d'impuretés pour Fe et Si. ; et/ou
- On ajoute au moins un élément choisi pour affiner les grains par exemple AlTiC ou AITiB2 (par exemple sous forme AT5B ou AT3B), selon une quantité inférieure ou égale à 50 kg/tonne, de préférence inférieure ou égale à 20 kg/tonne, encore plus préférentiellement inférieure ou égale à 12 kg/tonne chacun, et inférieure ou égale à 50 kg/tonne, de préférence inférieure ou égale à 20 kg/tonne au total.

D'autres avantages et caractéristiques ressortiront plus clairement de la description qui va suivre et des exemples non limitatifs, et représentés sur les figures listées ci-dessous.

### FIGURES

**[****Fig. 1****]** La **Figure 1** est un schéma illustrant un procédé de fabrication additive de type SLM, ou EBM.
**[****Fig. 2****]** La **Figure 2** montre une éprouvette de fissuration telle qu'utilisée dans les exemples. La référence 1 correspond à la face utilisée pour les observations métallographiques, la référence 2 à la zone critique de mesure de la fissuration, la référence 3 à la direction de fabrication.
**[****Fig. 3****]** La **Figure 3** est un graphique présentant les résultats de l'analyse statistique issue du plan d'expériences de l'exemple 1, afin de déterminer l'effet des éléments d'addition Ni, Cu et Zr sur la fissuration. L'axe des ordonnées représente la longueur de fissure en µm et l'axe des abscisses le pourcentage massique.
**[****Fig. 4****]** La **Figure 4** est une géométrie d'éprouvette de test utilisée pour effectuer des essais de traction, telle qu'utilisée dans l'Exemple 2.

### DESCRIPTION DETAILLEE DE L'INVENTION

Dans la description, sauf indication contraire :
- la désignation des alliages d'aluminium est conforme à la nomenclature établie par The Aluminum Association ;
- les teneurs en éléments chimiques sont désignées en % et représentent des fractions massiques.

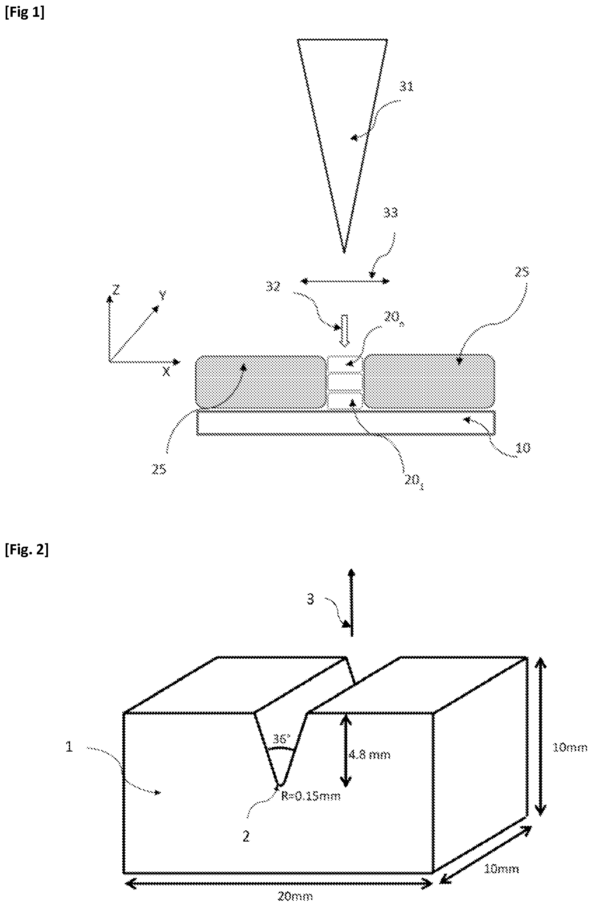

La Figure 1 décrit de façon générale un mode de réalisation, dans lequel le procédé de fabrication additive selon l'invention est mis en oeuvre. Selon ce procédé, le matériau d'apport 25 se présente sous la forme d'une poudre en alliage selon l'invention. Une source d'énergie, par exemple une source laser ou une source d'électrons 31, émet un faisceau d'énergie par exemple un faisceau laser ou un faisceau d'électrons 32. La source d'énergie est couplée au matériau d'apport par un système optique ou de lentilles électromagnétiques 33, le mouvement du faisceau pouvant ainsi être déterminé en fonction d'un modèle numérique *M.* Le faisceau d'énergie 32 suit un mouvement selon le plan longitudinal XY, décrivant un motif dépendant du modèle numérique *M.* La poudre 25 est déposée sur un plateau de construction 10. L'interaction du faisceau d'énergie 32 avec la poudre 25 engendre une fusion sélective de cette dernière, suivie d'une solidification, résultant en la formation d'une couche 20₁...20ₙ. Lorsqu'une couche a été formée, elle est recouverte de poudre 25 du métal d'apport et une autre couche est formée, superposée à la couche préalablement réalisée. L'épaisseur de la poudre formant une couche peut par exemple être de 10 à 200 µm. Lors de la fabrication, le lit de poudre peut être chauffé. Ce mode de fabrication additive est typiquement connu sous le nom de fusion sélective par laser (selective laser melting, SLM) quand le faisceau d'énergie est un faisceau laser, le procédé étant dans ce cas avantageusement exécuté à pression atmosphérique, et sous le nom de fusion par faisceau d'électrons (electron beam melting EBM) quand le faisceau d'énergie est un faisceau d'électrons, le procédé étant dans ce cas avantageusement exécuté à pression réduite, typiquement inférieure à 0,01 bar et de préférence inférieure à 0,1 mbar.

Dans un autre mode de réalisation, la couche est obtenue par frittage sélectif par laser (selective laser sintering, SLS ou direct métal laser sintering, DMLS), la couche de poudre d'alliage selon l'invention étant frittée sélectivement selon le modèle numérique choisi avec de l'énergie thermique fournie par un faisceau laser.

Dans encore un autre mode de réalisation non décrit par la figure 1, la poudre est projetée et fondue de façon simultanée par un faisceau généralement laser. Ce procédé est connu sous le nom de dépôt par fusion laser (laser melting déposition).

D'autres procédés peuvent être utilisés, notamment ceux connus sous les noms de dépôt direct d'énergie (Direct Energy Déposition, DED), dépôt direct de métal (Direct Metal Deposition, DMD), dépôt direct par laser (Direct Laser Déposition, DLD), technologie de dépôt par laser (Laser Déposition Technology, LDT), dépôt de métal par laser (Laser Metal Deposition, LMD), ingénierie de formes nettes par laser (Laser Engineering Net Shaping, LENS), technologie de plaquage par laser (Laser Cladding Technology, LCT), ou technologie de fabrication de formes libres par laser (Laser Freeform Manufacturing Technology, LFMT).

Dans un mode de réalisation, le procédé selon l'invention est utilisé pour la réalisation d'une pièce hybride comprenant une partie obtenue par des procédés classiques de laminage et/ou de filage et/ou de moulage et/ou de forgeage optionnellement suivi d'usinage et une partie solidaire obtenue par fabrication additive. Ce mode de réalisation peut également convenir pour la réparation de pièces obtenues par les procédés classiques.

On peut également, dans un mode de réalisation de l'invention, utiliser le procédé selon l'invention pour la réparation de pièces obtenues par fabrication additive.

A l'issue de la formation des couches successives on obtient une pièce brute ou pièce à l'état brut de fabrication.

De préférence, la limite élastique de la pièce à l'état brut de fabrication obtenue selon la présente invention est inférieure à 450 MPa, préférentiellement inférieure à 400 MPa, plus préférentiellement de 200 à 400 MPa, et encore plus préférentiellement de 200 à 350 MPa. De préférence, la limite élastique d'une pièce selon la présente invention après un traitement thermique ne comportant pas d'opération de mise en solution ni de trempe est supérieure à la limite élastique de cette même pièce à l'état brut de fabrication. De préférence, la limite élastique d'une pièce selon la présente invention après un traitement thermique tel que celui cité ci-avant est supérieure à 350 MPa, préférentiellement supérieure à 400 MPa.

La poudre selon la présente invention peut présenter au moins l'une des caractéristiques suivantes :
- taille moyenne de particules de 3 à 100 µm, de préférence de 5 à 25 µm, ou de 20 à 60 µm. Les valeurs données signifient qu'au moins 80 % des particules ont une taille moyenne dans la gamme spécifiée ;
- forme sphérique. La sphéricité d'une poudre peut par exemple être déterminée en utilisant un morphogranulomètre ;
- bonne coulabilité. La coulabilité d'une poudre peut par exemple être déterminée selon la norme ASTM B213 ou la norme ISO 4490 :2018. Selon la norme ISO 4490 :2018, le temps d'écoulement est de préférence inférieur à 50 s ;
- faible porosité, de préférence de 0 à 5 %, plus préférentiellement de 0 à 2 %, encore plus préférentiellement de 0 à 1 % en volume. La porosité peut notamment être déterminée par microscopie à balayage électronique ou par pycnométrie à l'hélium (voir la norme ASTM B923) ;
- absence ou faible quantité (moins de 10 %, de préférence moins de 5 % en volume) de petites particules (1 à 20 % de la taille moyenne de la poudre), dites satellites, qui collent aux particules plus grosses.

La poudre selon la présente invention peut être obtenue par des procédés classiques d'atomisation à partir d'un alliage selon l'invention sous forme liquide ou solide ou, alternativement, la poudre peut être obtenue par mélange de poudres primaires avant l'exposition au faisceau énergétique, les différentes compositions des poudres primaires ayant une composition moyenne correspondant à la composition de l'alliage selon l'invention.

On peut également ajouter des particules infusibles, non solubles, par exemple des oxydes ou des particules de diborure de titane TiB₂ ou des particules de carbure de titane TiC, dans le bain avant l'atomisation de la poudre et/ou lors du dépôt de la poudre et/ou lors du mélange des poudres primaires. Ces particules peuvent servir à affiner la microstructure. Elles peuvent également servir à durcir l'alliage si elles sont de taille nanométrique. Ces particules peuvent être présentes selon une fraction volumique inférieure à 30 %, de préférence inférieure à 20 %, plus préférentiellement inférieure à 10 %.

La poudre selon la présente invention peut être obtenue par exemple par atomisation par jet de gaz, atomisation plasma, atomisation par jet d'eau, atomisation par ultrasons, atomisation par centrifugation, électrolyse et sphéroïdisation, ou broyage et sphéroïdisation.

De préférence, la poudre selon la présente invention est obtenue par atomisation par jet de gaz. Le procédé d'atomisation par jet de gaz commence avec la coulée d'un métal fondu à travers une buse. Le métal fondu est ensuite atteint par des jets de gaz neutres, tels que de l'azote ou de l'argon, éventuellement accompagnés d'autres gaz, et atomisé en très petites gouttelettes qui se refroidissent et se solidifient en tombant à l'intérieur d'une tour d'atomisation. Les poudres sont ensuite recueillies dans une canette. Le procédé d'atomisation par jet de gaz présente l'avantage de produire une poudre ayant une forme sphérique, contrairement à l'atomisation par jet d'eau qui produit une poudre ayant une forme irrégulière. Un autre avantage de l'atomisation par jet de gaz est une bonne densité de poudre, notamment grâce à la forme sphérique et à la distribution de taille de particules. Encore un autre avantage de ce procédé est une bonne reproductibilité de la distribution de taille de particules.

Après sa fabrication, la poudre selon la présente invention peut être étuvée, notamment afin de réduire son humidité. La poudre peut également être conditionnée et stockée entre sa fabrication et son utilisation.

La poudre selon la présente invention peut notamment être utilisée dans les applications suivantes :
- frittage sélectif par laser (Selective Laser Sintering ou SLS en anglais) ;
- frittage direct du métal par laser (Direct Metal Laser Sintering ou DMLS en anglais) ;
- frittage sélectif par chauffage (Selective Heat Sintering ou SHS en anglais) ;
- fusion sélective par laser (Selective Laser Melting ou SLM en anglais) ;
- fusion par faisceau d'électrons (Electron Beam Melting ou EBM en anglais) ;
- dépôt par fusion laser (Laser Melting Deposition en anglais) ;
- dépôt direct par apport d'énergie (Direct Energy Déposition ou DED en anglais) ;
- dépôt direct de métal (Direct Metal Déposition ou DMD en anglais) ;
- dépôt direct par laser (Direct Laser Deposition ou DLD en anglais) ;
- technologie de dépôt par Laser (Laser Déposition Technology ou LDT en anglais) ;
- ingénierie de formes nettes par laser (Laser Engineering Net Shaping ou LENS en anglais) ;
- technologie de plaquage par laser (Laser Cladding Technology ou LCT en anglais) ;
- technologie de fabrication de formes libres par laser (Laser Freeform Manufacturing Technology ou LFMT en anglais) ;
- dépôt par fusion laser (Laser Metal Deposition ou LMD en anglais) ;
- pulvérisation à froid (Cold Spray Consolidation ou CSC en anglais) ;
- fabrication additive par friction (Additive Friction Stir ou AFS en anglais) ;
- frittage par étincelle au plasma ou frittage flash (Field Assisted Sintering Technology, FAST ou spark plasma sintering en anglais) ; ou
- soudage par friction rotative (Inertia Rotary Friction Welding ou IRFW.

L'invention sera décrite plus en détails dans l'exemple ci-après.

L'invention n'est pas limitée aux modes de réalisation décrits dans la description ci-avant ou dans les exemples ci-après, et peut varier largement dans le cadre de l'invention telle que définie par les revendications jointes à la présente description.

### EXEMPLES

### Exemple 1 :

Une étude a été menée sur quatre alliages (B, C, D et E) dans le cadre d'un plan d'expériences de type Taguchi à trois variables (%Ni, %Cu et %Zr). Les compositions, déterminées par ICP (Inductively Coupled Plasma) en % massique, sont indiquées dans le Tableau 1 ci-après. Ces quatre alliages ont été obtenus sous forme de poudre pour procédé SLM à l'aide d'une atomisation par jet de gaz (Ar). La taille des particules était essentiellement de 3 µm à 100 µm, le D10 était de 8 à 10 µm, le D50 de 24 à 28 µm et le D90 de 48 à 56 µm.

**[Tableau 1]**

| **Alliage** | **%Mn** | **%Ni** | **%Cu** | **%Zr** |
|---|---|---|---|---|
| B | 3,57 | 0,00 | 1,97 | 1,30 |
| C | 3,52 | 2,00 | 3,84 | 1,26 |
| D | 3,53 | 0,00 | 3,85 | 1,02 |
| E | 3,56 | 1,94 | 1,97 | 1,00 |

A l'aide d'une machine SLM de type EOS290 (fournisseur EOS), des éprouvettes de fissuration ont été réalisées dans le but d'étudier la sensibilité de ces alliages à la fissuration.

Ces éprouvettes, qui sont représentées dans la Figure 2, présentent une géométrie particulière possédant un site critique propice à l'amorçage de fissures. Lors de l'impression de ces éprouvettes, les principaux paramètres laser utilisés étaient les suivants : puissance laser de 370 W ; vitesse de balayage de 1400 mm/s ; écart-vecteur de 0,11 mm ; épaisseur de couche de 60 µm. La machine EOSM290 utilisée permet de chauffer le plateau de construction par éléments chauffants jusqu'à une température de 200°C. Des éprouvettes de fissuration ont été imprimées à l'aide de cette machine avec une température plateau de 200°C. Dans tous les cas, les éprouvettes ont subi un traitement de détente après fabrication de 4 heures à 300°C. Après fabrication, les éprouvettes ont été polies mécaniquement jusqu'à 1 µm au niveau de la face indiquée sur la figure 2 (Référence 1). La longueur totale de la fissure présente au site critique d'amorçage des éprouvettes a été mesurée à l'aide d'un microscope optique avec un grossissement de X50. Les résultats sont synthétisés au Tableau 2 ci-après.

**[Tableau 2]**

| **Alliage** | **Température de chauffe du plateau (°C)** | **Longueur de fissure (µm)** |
|---|---|---|
| B | 200 | 1456 |
| C | 200 | 1609 |
| D | 200 | 1051 |
| E | 200 | 543 |

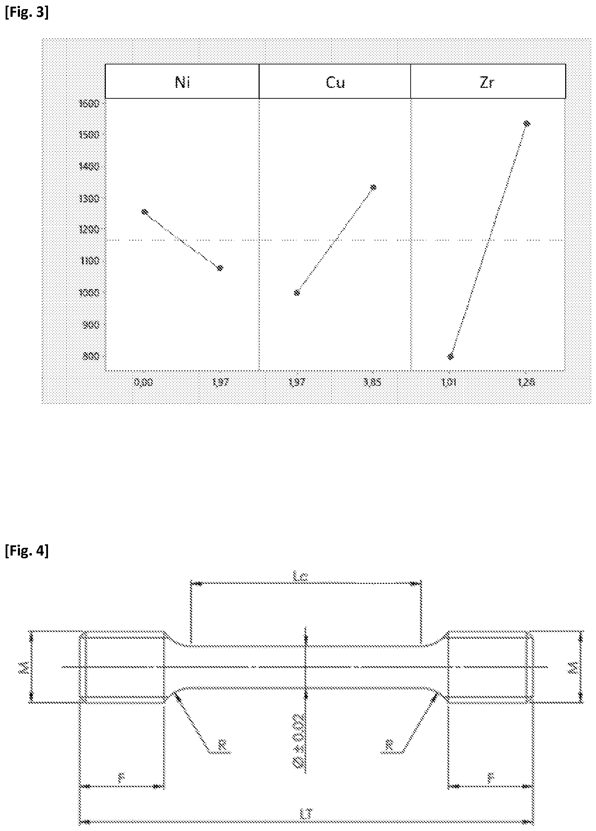

Une analyse statistique des résultats issus de ce plan d'expériences a été réalisée sous forme de graphiques des effets principaux des éléments d'addition, comme représenté sur la Figure 3. Ce graphique montre comment un facteur (ici la teneur en élément d'addition) influe sur la réponse observée (ici la longueur de fissure mesurée sur les échantillons de fissuration). Pour cela, la moyenne des réponses pour chaque niveau de facteur est calculée et positionnée sur le graphe et une ligne relie les points de chacun des niveaux de facteur.

Lorsque la ligne est horizontale, il n'existe aucun effet principal (c'est-à-dire que chaque niveau de facteur influe de la même façon sur la réponse mesurée). Lorsque la ligne n'est pas horizontale, il existe un effet principal (les deux niveaux de facteur influent donc différemment sur la réponse mesurée). Plus la pente de cette ligne est importante, plus l'effet principal est conséquent.

Le graphe de la Figure 3 montre que, sur les plages de compositions étudiées, une diminution de 1 % de Ni entraîne une augmentation de la longueur de fissuration moyenne de 90 µm ; une diminution de 1 % de Cu entraîne une diminution de la longueur de fissuration moyenne de 175 µm et une diminution de 1 % de Zr entraîne une diminution de la longueur de fissuration moyenne de 2724 µm.

Les résultats de cet exemple montrent que sur les plages de composition étudiées, le Zr présente un effet prépondérant sur la fissuration. Plus précisément, une diminution de la teneur en Zr est préférable pour limiter la sensibilité à la fissuration.

Il est à noter que, dans cet exemple, les inventeurs se sont volontairement placés dans des conditions propices à favoriser la fissuration, afin de pouvoir effectivement comparer l'impact des éléments d'addition sur la sensibilité à la fissuration. L'utilisation d'éprouvettes avec des formes moins complexes n'aurait pas permis d'être suffisamment discriminant. Le présent exemple sert donc uniquement à montrer l'impact des éléments d'addition sur la sensibilité à la fissuration.

### Exemple 2 :

Une étude a été menée sur 6 alliages A, F, G, H, I et J. Les compositions des 6 alliages, déterminées par ICP (Inductively Coupled Plasma) en % massique, sont indiquées dans le Tableau 3 suivant. Ces 6 alliages ont été obtenus sous forme de poudre pour procédé SLM à l'aide d'une atomisation par jet de gaz (Ar). La taille des particules était essentiellement de 3 µm à 100 µm, le D10 était de 8 à 36 µm, le D50 de 24 à 48 µm et le D90 de 48 à 67 µm.

**[Tableau 3]**

| **Alliage** | **%Mn** | **%Ni** | **%Cu** | **%Zr** |
|---|---|---|---|---|
| A | 3,52 | 2,93 | 1,99 | 1,53 |
| F | 3,77 | 2,77 | 1,90 | 1,02 |
| G | 2,89 | 2,44 | 1,90 | 0,40 |
| H | 3,07 | 4,13 | 1,94 | 0,63 |
| I | 3,97 | 2,51 | 1,95 | 0,66 |
| J | 3,94 | 4,00 | 1,92 | 0,34 |

Des éprouvettes de fissuration (identiques à celle de l'exemple 1) et des éprouvettes cylindriques (selon les explications données ci-après) ont été réalisées à partir des alliages du Tableau 3 ci-avant.

A l'aide d'une machine SLM de type EOSM290 (fournisseur EOS), des échantillons cylindriques verticaux par rapport à la direction de construction (direction Z) ont été réalisés dans le but de déterminer les caractéristiques mécaniques de l'alliage. Ces échantillons possèdent un diamètre de 11 mm et une hauteur de 46 mm. Lors de l'impression de ces échantillons, les principaux paramètres laser utilisés étaient les suivants : puissance laser de 370 W ; vitesse de balayage de 1400 mm/s ; écart-vecteur de 0,11 mm ; épaisseur de couche de 60 µm. La température de chauffage du plateau de fabrication était de 100°C. Dans tous les cas, les échantillons ont subi un traitement de détente après fabrication de 4 heures à 300°C.

Les échantillons cylindriques ont été usinés pour obtenir des éprouvettes de traction avec les caractéristiques suivantes, telles que décrites dans le Tableau 4 ci-après et la Figure 4.

**[Tableau 4]**

| **Type éprouvette** | **Ø (mm)** | **M (mm)** | **LT (mm)** | **R (mm)** | **Lc (mm)** | **F (mm)** |
|---|---|---|---|---|---|---|
| TOR 4 | 4 | 8 | 45 | 3 | 22 | 8,7 |

Dans le Tableau 4 ci-avant et la Figure 4, Ø représente le diamètre de la partie centrale de l'éprouvette ; M la largeur des deux extrémités de l'éprouvette ; LT la longueur totale de l'éprouvette ; R le rayon de courbure entre la partie centrale et les extrémités de l'éprouvette ; Lc la longueur de la partie centrale de l'éprouvette et F la longueur des deux extrémités de l'éprouvette.

Les éprouvettes ont ensuite été testées en traction à température ambiante (25°C), à l'état brut de détente (sans traitement thermique supplémentaire autre que la détente) selon la norme NF EN ISO 6892-1 (2009-10). Les principaux résultats sont présentés dans le Tableau 5 ci-après.

**[Tableau 5]**

| **Alliage** | **Température de chauffe du plateau (°C)** | **Longueur de fissure (µm)** | **RP02 mesuré à 25°c en MPa sur état brut de détente** |
|---|---|---|---|
| A | 100 | 490 | 372 |
| F | 100 | 0 | 303 |
| G | 100 | 0 | 184 |
| H | 100 | 0 | 267 |
| I | 100 | 0 | 235 |
| J | 100 | 0 | 245 |

Les résultats du Tableau 5 ci-avant montrent que, pour une température du plateau de fabrication de 100°C, une teneur en Zr inférieure ou égale à 1.3% (alliages F à J) a permis de supprimer complètement la fissuration sur les éprouvettes de fissuration.

Les résultats du Tableau 5 montrent également qu'une valeur de RP02 à l'état brut de détente inférieure à 400 MPa, et de préférence inférieure à 370 MPa, serait avantageuse pour limiter la sensibilité à la fissuration.

### Exemple 3 :

Une étude similaire à celle de l'exemple 2 a été réalisée sur 5 alliages. Les compositions de ces 5 alliages, déterminées par ICP (Inductively Coupled Plasma) en % massique, sont indiquées dans le Tableau 6 ci-après.

Ces 5 alliages ont été obtenus sous forme de poudre pour procédé SLM à l'aide d'une atomisation par jet de gaz (Ar). La taille des particules était essentiellement de 3 µm à 100 µm, le D10 était de 8 à 36 µm, le D50 de 24 à 48 µm et le D90 de 48 à 67 µm.

**[Tableau 6]**

| **Alliage** | **%Mn** | **%Ni** | **%Cu** | **%Zr** |
|---|---|---|---|---|
| F | 3,77 | 2,77 | 1,90 | 1,02 |
| G | 2,89 | 2,44 | 1,90 | 0,40 |
| H | 3,07 | 4,13 | 1,94 | 0,63 |
| I | 3,97 | 2,51 | 1,95 | 0,66 |
| J | 3,94 | 4,00 | 1,92 | 0,34 |

A l'aide d'une machine SLM de type EOSM290 (fournisseur EOS), des échantillons cylindriques verticaux par rapport à la direction de construction (direction Z) ont été réalisés dans le but de déterminer les caractéristiques mécaniques de l'alliage. Ces échantillons possèdent un diamètre de 11 mm et une hauteur de 46 mm. Lors de l'impression de ces échantillons, les principaux paramètres laser utilisés étaient les suivants : puissance laser de 370 W, vitesse de balayage de 1400 mm/s ; écart-vecteur de 0,11 mm ; épaisseur de couche de 60 µm. Le plateau de construction a été chauffé à une température de 100°C.

Dans tous les cas, les échantillons ont subi un traitement de détente après fabrication de 4 heures à 300°C.

Les échantillons cylindriques ont été usinés pour obtenir des éprouvettes de traction similaires à celle de l'exemple 2 ci-avant.

Après usinage, certaines éprouvettes ont subi un traitement thermique de 1 h à 400°C. Le traitement thermique de 1 h à 400°C permet de simuler une opération post fabrication de compression isostatique à chaud ou un vieillissement de longue durée à une température de service entre 100°C et 300°C de la pièce finale.

Les éprouvettes ont ensuite été testées en traction à température ambiante (25°C) selon la norme NF EN ISO 6892-1 (2009-10) et à chaud (200°C) selon la norme NF EN ISO 6892-2 (2018). Les principaux résultats sont présentés dans le Tableau 7 ci-après.

**[Tableau 7]**

| **Alliage** | **Température du plateau de construction (°C)** | **Durée de traitement thermique à 400°C (h)** | **Température de l'essai de traction (°C)** | **RP02 (MPa)** |
|---|---|---|---|---|
| F | 100 | 0 | 25 | 303 |
| G | 100 | 0 | 25 | 184 |
| H | 100 | 0 | 25 | 267 |
| I | 100 | 0 | 25 | 235 |
| J | 100 | 0 | 25 | 245 |
| F | 100 | 1 | 25 | 420 |
| G | 100 | 1 | 25 | 187 |
| H | 100 | 1 | 25 | 291 |
| I | 100 | 1 | 25 | 291 |
| J | 100 | 1 | 25 | 222 |
| F | 100 | 0 | 200 | 270 |
| G | 100 | 0 | 200 | 179 |
| H | 100 | 0 | 200 | 242 |
| I | 100 | 0 | 200 | 218 |
| J | 100 | 0 | 200 | 235 |
| F | 100 | 1 | 200 | 238 |
| G | 100 | 1 | 200 | 175 |
| H | 100 | 1 | 200 | 208 |
| I | 100 | 1 | 200 | 211 |
| J | 100 | 1 | 200 | 192 |

D'après le Tableau 7 ci-avant, à l'état brut de détente (sans traitement thermique post fabrication autre que la détente), l'ensemble des alliages testés présente une limite élastique à 25°C inférieure à 310 MPa, ce qui est bénéfique pour la processabilité des alliages en limitant le niveau des contraintes résiduelles lors de la fabrication. Les meilleures propriétés mécaniques à température ambiante après traitement thermique de 1 h à 400°C sont obtenues pour l'alliage F (RP02 de 420 MPa) suivi par les alliages H et I (291 MPa). Les plus faibles performances sont obtenues pour les alliages G et J, 187 et 222 MPa, respectivement. Ces résultats montrent l'impact positif de la teneur en Zr sur les performances mécaniques après traitement de durcissement. Une teneur en Zr minimale de 0.6 % est ainsi nécessaire pour avoir un RP02 minimum de 250 MPa après traitement thermique de 1 h à 400°C.

Pour les essais de tractions à 200°C, les résultats du Tableau 7 ci-avant montrent que, pour l'ensemble de alliages testés, l'état brut de détente est avantageux par rapport à l'état avec un traitement thermique post de fabrication de 1 h à 400°C.

Le traitement thermique de 1 h à 400°C permet de simuler l'effet d'un vieillissement de très longue durée à 200°C. Les meilleures performances à 200°C après traitement thermique de 1 h à 400°C ont été obtenues pour l'alliage F suivi par les alliages H et I. Les plus faibles performances sont de nouveaux obtenues pour les alliages G et J (RP02< 200 MPa).

Une teneur en Zr minimale de 0,6 % semble ainsi préférable pour avoir une bonne stabilité thermique des propriétés mécaniques à 200°C.

Dans le cadre d'essais supplémentaires, non montrés ici, avec les compositions selon la présente invention sur une autre machine SLM qui dispose d'un plateau chauffant jusqu'à une température de 500°C, les inventeurs ont démontré qu'une température de plateau de 250 à 350°C, et préférentiellement de 280 à 330°C, a également permis d'éviter la fissuration sur les éprouvettes de fissuration, sans dégrader les performances mécaniques à température ambiante et à 200°C. De manière surprenante, malgré l'augmentation de la température du plateau, il n'y a pas eu de baisse des propriétés mécaniques à l'état brut ou après un traitement thermique. Sans être lié par la théorie, il semble que, dans ces conditions, les alliages selon la présente invention permettent de maintenir une bonne aptitude pour le piégeage des éléments d'addition en solution solide, et notamment le Zr. Une augmentation supplémentaire de la température du plateau, par exemple à 400°C ou à 500°C, semble permettre de réduire la vitesse de solidification lors du procédé SLM et de limiter ainsi le piégeage du Zr en solution solide, ce qui semble abaisser les propriétés mécaniques à l'état brut, ainsi que l'aptitude des alliages à un durcissement supplémentaire lors de traitements thermiques post fabrication, par exemple à 400°C. En conclusion, la plage de température du plateau qui semble maximiser la sensibilité à la fissuration est située entre 150°C et 250°C.

Ainsi, les plages de températures du plateau de construction recommandées selon la présente invention sont soit de 25 à 150°C, préférentiellement de 50 à 130°C, plus préférentiellement de 80 à 110°C, soit à une température de plus de 250 à moins de 350°C, préférentiellement de 280 à 330°C.

## Revendications

1. Procédé de fabrication d'une pièce comportant une formation de couches métalliques solides successives (20₁...20ₙ), superposées les unes aux autres, chaque couche décrivant un motif défini à partir d'un modèle numérique (M), chaque couche étant formée par le dépôt d'un métal (25), dit métal d'apport, le métal d'apport étant soumis à un apport d'énergie de façon à entrer en fusion et à constituer, en se solidifiant, ladite couche, dans lequel le métal d'apport prend la forme d'une poudre (25), dont l'exposition à un faisceau énergétique (32) résulte en une fusion suivie d'une solidification de façon à former une couche solide (20₁...20ₙ),
le procédé étant **caractérisé en ce que** le métal d'apport (25) est un alliage d'aluminium comprenant au moins les éléments d'alliage suivant :
- Zr, selon une fraction massique de 0,60 à 1,40 %, de préférence de 0,70 à 1,30 %, préférentiellement de 0,80 à 1,2 %, plus préférentiellement de 0,85 à 1,15 % ; encore plus préférentiellement de 0,90 à 1,10 % ;
- Mn, selon une fraction massique de 2,00 à 5,00 %, de préférence de 3,00 à 5,00 %, préférentiellement de 3,50 à 4,50 % ;
- Ni, selon une fraction massique de 1,00 à 5,00 %, de préférence de 2,00 à 4,00 %, préférentiellement de 2,50 à 3,50 % ;
- Cu, selon une fraction massique de 1,00 à 5,00 %, de préférence de 1,00 à 3,00 %, préférentiellement de 1,50 à 2,50 % ;
- optionnellement au moins un élément choisi parmi : Hf, Cr, Ti, Er, W, Nb, Ta, Y, Yb, Nd, Ce, Co, Mo, Lu, Tm, V et/ou du mischmétal, selon une fraction massique inférieure ou égale à 5,00 %, de préférence inférieure ou égale à 3,00 % chacun, et inférieure ou égale à 15,00 %, de préférence inférieure ou égale à 12,00 %, encore plus préférentiellement inférieure ou égale à 5,00 % au total ;
- optionnellement au moins un élément choisi parmi : Fe, Si, Mg, Zn, Sc, La, Sr, Ba, Sb, Bi, Ca, P, B, In et/ou Sn, selon une fraction massique inférieure ou égale à 1,00 %, de préférence inférieure ou égale à 0,50 %, préférentiellement inférieure ou égale à 0,30 %, plus préférentiellement inférieure ou égale à 0,10 %, encore plus préférentiellement inférieure ou égale à 700 ppm chacun, et inférieure ou égale à 2,00 %, de préférence inférieure ou égale à 1,00 % au total ;
- optionnellement au moins un élément choisi parmi : Ag selon une fraction massique de 0,06 à 1,00 %, Li selon une fraction massique de 0,06 à 1,00 % ;
- optionnellement des impuretés selon une fraction massique inférieure à 0,05 % chacune (soit 500 ppm) et inférieure à 0,15 % au total ;
- le reste étant de l'aluminium.

2. Procédé de fabrication d'une pièce comportant une formation de couches métalliques solides successives (20₁...20ₙ), superposées les unes aux autres, chaque couche décrivant un motif défini à partir d'un modèle numérique (M), chaque couche étant formée par le dépôt d'un métal (25), dit métal d'apport, le métal d'apport étant soumis à un apport d'énergie de façon à entrer en fusion et à constituer, en se solidifiant, ladite couche, dans lequel le métal d'apport prend la forme d'une poudre (25), dont l'exposition à un faisceau énergétique (32) résulte en une fusion suivie d'une solidification de façon à former une couche solide (20₁...20ₙ),
le procédé étant **caractérisé en ce que** le métal d'apport (25) est un alliage d'aluminium comprenant au moins les éléments d'alliage suivant :
- Zr et au moins un élément choisi parmi : Ti, V, Sc, Hf, Er, Tm, Yb et Lu, selon une fraction massique de 0,60 à 1,40 %, de préférence de 0,70 à 1,30 %, préférentiellement de 0,80 à 1,20 %, plus préférentiellement de 0,85 à 1,15 % ; encore plus préférentiellement de 0,90 à 1,10 % au total, sachant que Zr représente de 10 à moins de 100 % des gammes de pourcentages données ci-avant ;
- Mn, selon une fraction massique de 2,00 à 5,00 %, de préférence de 3,00 à 5,00 %, préférentiellement de 3,50 à 4,50 % ;
- Ni, selon une fraction massique de 1,00 à 5,00 %, de préférence de 2,00 à 4,00 %, préférentiellement de 2,50 à 3,50 % ;
- Cu, selon une fraction massique de 1,00 à 5,00 %, de préférence de 1,00 à 3,00 %, préférentiellement de 1,50 à 2,50 % ;
- optionnellement au moins un élément choisi parmi : Cr, W, Nb, Ta, Y, Nd, Ce, Co, Mo et/ou du mischmétal, selon une fraction massique inférieure ou égale à 5,00 %, de préférence inférieure ou égale à 3,00 % chacun, et inférieure ou égale à 15,00 %, de préférence inférieure ou égale à 12,00 %, encore plus préférentiellement inférieure ou égale à 5,00 % au total ;
- optionnellement au moins un élément choisi parmi : Fe, Si, Mg, Zn, La, Sr, Ba, Sb, Bi, Ca, P, B, In et/ou Sn, selon une fraction massique inférieure ou égale à 1,00 %, de préférence inférieure ou égale à 0,50 %, préférentiellement inférieure ou égale à 0,30 %, plus préférentiellement inférieure ou égale à 0,10 %, encore plus préférentiellement inférieure ou égale à 700 ppm chacun, et inférieure ou égale à 2,00 %, de préférence inférieure ou égale à 1,00 % au total ;
- optionnellement au moins un élément choisi parmi : Ag selon une fraction massique de 0,06 à 1,00 %, Li selon une fraction massique de 0,06 à 1,00 % ;
- optionnellement des impuretés selon une fraction massique inférieure à 0,05 % chacune (soit 500 ppm) et inférieure à 0,15 % au total ;
- le reste étant de l'aluminium.

3. Procédé selon l'une quelconque des revendications précédentes, dans lequel on évite l'addition de La, Bi, Mg, Er, Yb, Y, Sc et/ou Zn, la fraction massique préférée de chacun de ces éléments étant alors inférieure à 0,05 %, et de préférence inférieure à 0,01 %.

4. Procédé selon l'une quelconque des revendications précédentes, dans lequel l'alliage d'aluminium comprend également au moins un élément pour affiner les grains, par exemple AlTiC ou AITiB2, selon une quantité inférieure ou égale à 50 kg/tonne, de préférence inférieure ou égale à 20 kg/tonne, encore plus préférentiellement inférieure ou égale à 12 kg/tonne chacun, et inférieure ou égale à 50 kg/tonne, de préférence inférieure ou égale à 20 kg/tonne au total.

5. Procédé selon l'une quelconque des revendications précédentes, comportant, suite à la formation des couches (20₁...20ₙ),
- un traitement thermique typiquement à une température d'au moins 100°C et d'au plus 500°C, de préférence de 300 à 450°C ; et/ou
- une compression isostatique à chaud.

6. Procédé selon l'une quelconque des revendications précédentes, dans lequel la pièce est fabriquée soit à une température de 25 à 150°C, de préférence de 50 à 130°C, préférentiellement de 80 à 110°C, soit à une température de plus de 250 à moins de 350°C, de préférence de 280 à 330°C.

7. Pièce métallique obtenue par un procédé objet de l'une quelconque des revendications 1 à 6.

8. Poudre comprenant un alliage d'aluminium comprenant au moins les éléments d'alliage suivant :
- Zr, selon une fraction massique de 0,60 à 1,40 %, de préférence de 0,70 à 1,30 %, préférentiellement de 0,80 à 1,20 %, plus préférentiellement de 0,85 à 1,15 %; encore plus préférentiellement de 0,90 à 1,10 % ;
- Mn, selon une fraction massique de 2,00 à 5,00 %, de préférence de 3,00 à 5,00 %, préférentiellement de 3,50 à 4,50 % ;
- Ni, selon une fraction massique de 1,00 à 5,00 %, de préférence de 2,00 à 4,00 %, préférentiellement de 2,50 à 3,50 % ;
- Cu, selon une fraction massique de 1,00 à 5,00 %, de préférence de 1,00 à 3,00 %, préférentiellement de 1,50 à 2,50 % ;
- optionnellement au moins un élément choisi parmi : Hf, Cr, Ti, Er, W, Nb, Ta, Y, Yb, Nd, Ce, Co, Mo, Lu, Tm, V et/ou du mischmétal, selon une fraction massique inférieure ou égale à 5,00 %, de préférence inférieure ou égale à 3,00 % chacun, et inférieure ou égale à 15,00 %, de préférence inférieure ou égale à 12,00 %, encore plus préférentiellement inférieure ou égale à 5,00 % au total ;
- optionnellement au moins un élément choisi parmi : Fe, Si, Mg, Zn, Sc, La, Sr, Ba, Sb, Bi, Ca, P, B, In et/ou Sn, selon une fraction massique inférieure ou égale à 1,00 %, de préférence inférieure ou égale à 0,50 %, préférentiellement inférieure ou égale à 0,30 %, plus préférentiellement inférieure ou égale à 0,10 %, encore plus préférentiellement inférieure ou égale à 700 ppm chacun, et inférieure ou égale à 2,00 %, de préférence inférieure ou égale à 1,00 % au total ;
- optionnellement au moins un élément choisi parmi : Ag selon une fraction massique de 0,06 à 1,00 %, Li selon une fraction massique de 0,06 à 1,00 % ;
- optionnellement des impuretés selon une fraction massique inférieure à 0,05 % chacune (soit 500 ppm) et inférieure à 0,15 % au total ;
- le reste étant de l'aluminium.

9. Poudre comprenant un alliage d'aluminium comprenant au moins les éléments d'alliage suivant :
- Zr et au moins un élément choisi parmi : Ti, V, Sc, Hf, Er, Tm, Yb et Lu, selon une fraction massique de 0,60 à 1,40 %, de préférence de 0,70 à 1,30 %, préférentiellement de 0,80 à 1,20 %, plus préférentiellement de 0,85 à 1,15 % ; encore plus préférentiellement de 0,90 à 1,10 % au total, sachant que Zr représente de 10 à moins de 100 % des gammes de pourcentages données ci-avant ;
- Mn, selon une fraction massique de 2,00 à 5,00 %, de préférence de 3,00 à 5,00 %, préférentiellement de 3,50 à 4,50 % ;
- Ni, selon une fraction massique de 1,00 à 5,00 %, de préférence de 2,00 à 4,00 %, préférentiellement de 2,50 à 3,50 % ;
- Cu, selon une fraction massique de 1,00 à 5,00 %, de préférence de 1,00 à 3,00 %, préférentiellement de 1,50 à 2,50 % :
- optionnellement au moins un élément choisi parmi : Cr, W, Nb, Ta, Y, Nd, Ce, Co, Mo et/ou du mischmétal, selon une fraction massique inférieure ou égale à 5,00 %, de préférence inférieure ou égale à 3,00 % chacun, et inférieure ou égale à 15,00 %, de préférence inférieure ou égale à 12,00 %, encore plus préférentiellement inférieure ou égale à 5,00 % au total ;
- optionnellement au moins un élément choisi parmi Fe, Si, Mg, Zn, La, Sr, Ba, Sb, Bi, Ca, P, B, In et/ou Sn, selon une fraction massique inférieure ou égale à 1,00 %, de préférence inférieure ou égale à 0,50 %, préférentiellement inférieure ou égale à 0,30 %, plus préférentiellement inférieure ou égale à 0,10 %, encore plus préférentiellement inférieure ou égale à 700 ppm chacun, et inférieure ou égale à 2,00 %, de préférence inférieure ou égale à 1,00 % au total ;
- optionnellement au moins un élément choisi parmi : Ag selon une fraction massique de 0,06 à 1,00 %, Li selon une fraction massique de 0,06 à 1,00 % ;
- optionnellement des impuretés selon une fraction massique inférieure à 0,05 % chacune (soit 500 ppm) et inférieure à 0,15 % au total ;
- le reste étant de l'aluminium.

## Patentansprüche

1. Verfahren zum Herstellen eines Teils, das eine Bildung aufeinanderfolgenden festen Metallschichten (20₁...20ₙ) beinhaltet, die übereinandergelegt sind, wobei jede Schicht ein Motiv beschreibt, das aus einem digitalen Modell (M) definiert wird, wobei jede Schicht durch die Ablagerung eines Zusatz genannten Metalls (25) gebildet wird, wobei der Zusatz einem Energieeintrag ausgesetzt wird, um zu schmelzen und nach dem Verfestigen die Schicht darzustellen, wobei der Zusatz die Form eines Pulvers (25) annimmt, dessen Aussetzung an einen Energiestrahl (32) zur Schmelzung, gefolgt von einer Verfestigung führt, um eine feste Schicht (20₁...20ₙ) zu bilden,
wobei das Verfahren **dadurch gekennzeichnet ist, dass** der Zusatz (25) eine Aluminiumlegierung ist, die mindestens die folgenden Legierungselemente umfasst:
- Zr entsprechend einem Massenanteil von 0,60 bis 1,40 %, vorzugsweise von 0,70 bis 1,30 %, bevorzugt von 0,80 bis 1,2 %, bevorzugter von 0,85 bis 1,15 %; noch bevorzugter von 0,90 bis 1,10 %;
- Mn entsprechend einem Massenanteil von 2,00 bis 5,00 %, vorzugsweise von 3,00 bis 5,00 %, bevorzugt von 3,50 bis 4,50 %;
- Ni entsprechend einem Massenanteil von 1,00 bis 5,00 %, vorzugsweise von 2,00 bis 4,00 %, bevorzugt von 2,50 bis 3,50 %;
- Cu entsprechend einem Massenanteil von 1,00 bis 5,00 %, vorzugsweise von 1,00 bis 3,00 %, bevorzugt von 1,50 bis 2,50%;
- optional mindestens ein Element, ausgewählt aus: Hf, Cr, Ti, Er, W, Nb, Ta, Y, Yb, Nd, Ce, Co, Mo, Lu, Tm, V und/oder Mischmetall entsprechend einem Massenanteil jeweils kleiner oder gleich 5,00 %, vorzugsweise kleiner oder gleich 3,00 %, und kleiner oder gleich 15,00 %, vorzugsweise kleiner oder gleich 12,00 %, noch bevorzugter kleiner oder gleich 5,00 % insgesamt;
- optional mindestens ein Element, ausgewählt aus: Fe, Si, Mg, Zn, Sc, La, Sr, Ba, Sb, Bi, Ca, P, B, In und/oder Sn, entsprechend einem Massenanteil jeweils kleiner oder gleich 1,00 %, vorzugsweise kleiner oder gleich 0,50 %, bevorzugt kleiner oder gleich 0,30 %, bevorzugter kleiner oder gleich 0,10 %, noch bevorzugter kleiner oder gleich 700 ppm, und kleiner oder gleich 2,00 %, vorzugsweise kleiner oder gleich 1,00 % insgesamt;
- optional mindestens ein Element, ausgewählt aus: Ag entsprechend einem Massenanteil von 0,06 bis 1,00 %, Li entsprechend einem Massenanteil von 0,06 bis 1,00 %;
- optional Verunreinigungen entsprechend einem Massenanteil jeweils kleiner als 0,05 % (oder 500 ppm) und kleiner als 0,15 % insgesamt;
- wobei der Rest Aluminium ist.

2. Verfahren zum Herstellen eines Teils, das eine Bildung aufeinanderfolgenden festen Metallschichten (20₁...20ₙ) beinhaltet, die übereinandergelegt sind, wobei jede Schicht ein Motiv beschreibt, das aus einem digitalen Modell (M) definiert wird, wobei jede Schicht durch die Ablagerung eines Zusatz genannten Metalls (25) gebildet wird, wobei der Zusatz einem Energieeintrag ausgesetzt wird, um zu schmelzen und nach dem Verfestigen die Schicht darzustellen, wobei der Zusatz die Form eines Pulvers (25) annimmt, dessen Aussetzung an einen Energiestrahl (32) zur Schmelzung, gefolgt von einer Verfestigung führt, um eine feste Schicht (20₁...20ₙ) zu bilden,
wobei das Verfahren **dadurch gekennzeichnet ist, dass** der Zusatz (25) eine Aluminiumlegierung ist, die mindestens die folgenden Legierungselemente umfasst:
- Zr und mindestens ein Element, ausgewählt aus: Ti, V, Sc, Hf, Er, Tm, Yb et Lu entsprechend einem Massenanteil von 0,60 bis 1,40 %, vorzugsweise von 0,70 bis 1,30 %, bevorzugt von 0,80 bis 1,20 %, bevorzugter von 0,85 bis 1,15 %; noch bevorzugter von 0,90 bis 1,10 % insgesamt, wobei zu berücksichtigen ist, dass Zr von 10 bis weniger als 100 % der zuvor angeführten Prozentsätze repräsentiert;
- Mn entsprechend einem Massenanteil von 2,00 bis 5,00 %, vorzugsweise von 3,00 bis 5,00 %, bevorzugt von 3,50 bis 4,50 %;
- Ni entsprechend einem Massenanteil von 1,00 bis 5,00 %, vorzugsweise von 2,00 bis 4,00 %, bevorzugt von 2,50 bis 3,50 %;
- Cu entsprechend einem Massenanteil von 1,00 bis 5,00 %, vorzugsweise von 1,00 bis 3,00 %, bevorzugt von 1,50 bis 2,50%;
- optional mindestens ein Element, ausgewählt aus: Cr, W, Nb, Ta, Y, Nd, Ce, Co, Mo und/oder Mischmetall entsprechend einem Massenanteil jeweils kleiner oder gleich 5,00 %, vorzugsweise kleiner oder gleich 3,00 %, und kleiner oder gleich 15,00 %, vorzugsweise kleiner oder gleich 12,00 %, noch bevorzugter kleiner oder gleich 5,00 % insgesamt;
- optional mindestens ein Element, ausgewählt aus: Fe, Si, Mg, Zn, La, Sr, Ba, Sb, Bi, Ca, P, B, In und/oder Sn, entsprechend einem Massenanteil jeweils kleiner oder gleich 1,00 %, vorzugsweise kleiner oder gleich 0,50 %, bevorzugt kleiner oder gleich 0,30 %, bevorzugter kleiner oder gleich 0,10 %, noch bevorzugter kleiner oder gleich 700 ppm, und kleiner oder gleich 2,00 %, vorzugsweise kleiner oder gleich 1,00 % insgesamt;
- optional mindestens ein Element, ausgewählt aus: Ag entsprechend einem Massenanteil von 0,06 bis 1,00 %, Li entsprechend einem Massenanteil von 0,06 bis 1,00 %;
- optional Verunreinigungen entsprechend einem Massenanteil jeweils kleiner als 0,05 % (oder 500 ppm) und kleiner als 0,15 % insgesamt;
- wobei der Rest Aluminium ist.

3. Verfahren nach einem der vorstehenden Ansprüche, wobei die Zugabe von La, Bi, Mg, Er, Yb, Y, Sc und/oder Zn vermieden wird, wobei der bevorzugte Massenanteil eines jeden dieser Elemente kleiner als 0,05 %, und vorzugsweise kleiner als 0,01 % ist.

4. Verfahren nach einem der vorstehenden Ansprüche, wobei die Aluminiumlegierung ebenfalls mindestens ein Element zum Verfeinern der Körner, beispielsweise AlTiC oder AlTiB2 jeweils entsprechend einer Menge kleiner oder gleich 50 kg/Tonne, vorzugsweise kleiner oder gleich 20 kg/Tonne, noch bevorzugter kleiner oder gleich12 kg/Tonne umfasst, und kleiner oder gleich 50 kg/Tonne, vorzugsweise kleiner oder gleich 20 kg/Tonne insgesamt.

5. Verfahren nach einem der vorstehenden Ansprüche, nach dem Bilden der Schichten (20₁...20ₙ) beinhaltend,
- eine Wärmebehandlung, typischerweise bei einer Temperatur von mindestens 100°C und höchstens 500°C, vorzugsweise von 300 bis 450°C; und/oder
- isostatisches Heißpressen.

6. Verfahren nach einem der vorstehenden Ansprüche, wobei das Teil entweder bei einer Temperatur von 25 bis 150°C, vorzugsweise von 50 bis 130°C, bevorzugt von 80 à 110°C, oder bei einer Temperatur von mehr als 250 bis weniger als 350°C, vorzugsweise von 280 bis 330°C hergestellt wird.

7. Metallteil, das aus einem der Verfahren nach einem der Ansprüche 1 bis 6 erhalten wird.

8. Pulver, umfassend eine Aluminiumlegierung, die mindestens die folgenden Legierungselemente umfasst:
- Zr entsprechend einem Massenanteil von 0,60 bis 1,40 %, vorzugsweise von 0,70 bis 1,30 %, bevorzugt von 0,80 bis 1,20 %, bevorzugter von 0,85 bis 1,15 %; noch bevorzugter von 0,90 bis 1,10 %;
- Mn entsprechend einem Massenanteil von 2,00 bis 5,00 %, vorzugsweise von 3,00 bis 5,00 %, bevorzugt von 3,50 bis 4,50 %;
- Ni entsprechend einem Massenanteil von 1,00 bis 5,00 %, vorzugsweise von 2,00 bis 4,00 %, bevorzugt von 2,50 bis 3,50 %;
- Cu entsprechend einem Massenanteil von 1,00 bis 5,00 %, vorzugsweise von 1,00 bis 3,00 %, bevorzugt von 1,50 bis 2,50%;
- optional mindestens ein Element, ausgewählt aus: Hf, Cr, Ti, Er, W, Nb, Ta, Y, Yb, Nd, Ce, Co, Mo, Lu, Tm, V und/oder Mischmetall entsprechend einem Massenanteil jeweils kleiner oder gleich 5,00 %, vorzugsweise kleiner oder gleich 3,00 %, und kleiner oder gleich 15,00 %, vorzugsweise kleiner oder gleich 12,00 %, noch bevorzugter kleiner oder gleich 5,00 % insgesamt;
- optional mindestens ein Element, ausgewählt aus: Fe, Si, Mg, Zn, Sc, La, Sr, Ba, Sb, Bi, Ca, P, B, In und/oder Sn, entsprechend einem Massenanteil jeweils kleiner oder gleich 1,00 %, vorzugsweise kleiner oder gleich 0,50 %, bevorzugt kleiner oder gleich 0,30 %, bevorzugter kleiner oder gleich 0,10 %, noch bevorzugter kleiner oder gleich 700 ppm, und kleiner oder gleich 2,00 %, vorzugsweise kleiner oder gleich 1,00 % insgesamt;
- optional mindestens ein Element, ausgewählt aus: Ag entsprechend einem Massenanteil von 0,06 bis 1,00 %, Li entsprechend einem Massenanteil von 0,06 bis 1,00 %;
- optional Verunreinigungen entsprechend einem Massenanteil jeweils kleiner als 0,05 % (oder 500 ppm) und kleiner als 0,15 % insgesamt;
- wobei der Rest Aluminium ist.

9. Pulver, umfassend eine Aluminiumlegierung, die mindestens die folgenden Legierungselemente umfasst:
- Zr und mindestens ein Element, ausgewählt aus: Ti, V, Sc, Hf, Er, Tm, Yb und Lu entsprechend einem Massenanteil von 0,60 bis 1,40 %, vorzugsweise von 0,70 bis 1,30 %, bevorzugt von 0,80 bis 1,20 %, bevorzugter von 0,85 bis 1,15 %; noch bevorzugter von 0,90 bis 1,10 % insgesamt, wobei zu berücksichtigen ist, dass Zr von 10 bis weniger als 100 % der zuvor angeführten Prozentsätze repräsentiert;
- Mn entsprechend einem Massenanteil von 2,00 bis 5,00 %, vorzugsweise von 3,00 bis 5,00 %, bevorzugt von 3,50 bis 4,50 %;
- Ni entsprechend einem Massenanteil von 1,00 bis 5,00 %, vorzugsweise von 2,00 bis 4,00 %, bevorzugt von 2,50 bis 3,50 %;
- Cu entsprechend einem Massenanteil von 1,00 bis 5,00 %, vorzugsweise von 1,00 bis 3,00 %, bevorzugt von 1,50 bis 2,50 %;
- optional mindestens ein Element, ausgewählt aus: Cr, W, Nb, Ta, Y, Nd, Ce, Co, Mo und/oder Mischmetall entsprechend einem Massenanteil jeweils kleiner oder gleich 5,00 %, vorzugsweise kleiner oder gleich 3,00 %, und kleiner oder gleich 15,00 %, vorzugsweise kleiner oder gleich 12,00 %, noch bevorzugter kleiner oder gleich 5,00 % insgesamt;
- optional mindestens ein Element, ausgewählt aus Fe, Si, Mg, Zn, La, Sr, Ba, Sb, Bi, Ca, P, B, In und/oder Sn, entsprechend einem Massenanteil jeweils kleiner oder gleich 1,00 %, vorzugsweise kleiner oder gleich 0,50 %, vorzugsweise kleiner oder gleich 0,30 %, bevorzugter kleiner oder gleich 0,10 %, noch bevorzugter kleiner oder gleich 700 ppm, und kleiner oder gleich 2,00 %, vorzugsweise kleiner oder gleich 1,00 % insgesamt;
- optional mindestens ein Element, ausgewählt aus: Ag entsprechend einem Massenanteil von 0,06 bis 1,00 %, Li entsprechend einem Massenanteil von 0,06 bis 1,00 %;
- optional Verunreinigungen entsprechend einem Massenanteil jeweils kleiner als 0,05 % (oder 500 ppm) und kleiner als 0,15 % insgesamt;
- wobei der Rest Aluminium ist.

## Claims

1. Method for producing a part comprising the production of successive solid metallic layers (20₁...20ₙ), which are superimposed on each other, each layer describing a pattern defined using a digital model (*M*), each layer being produced by depositing a metal (25), called filler metal, the filler metal being subjected to a supply of energy so as to become molten and to constitute, upon solidifying, said layer, wherein the filler metal takes the form of a powder (25), the exposure of which to an energy beam (32) results in a melting followed by a solidification, so as to form a solid layer (20₁...20ₙ),
the method being **characterized in that** the filler metal (25) is an aluminum alloy comprising at least the following alloy elements:
- Zr, in a mass fraction of 0.60 to 1.40%, preferably of 0.70 to 1.30%, preferably of 0.80 to 1.2 %, more preferably of 0.85 to 1.15%; even more preferably of 0.90 to 1.10%;
- Mn, in a mass fraction of 2.00 to 5.00%, preferably of 3.00 to 5.00%, preferably of 3.50 to 4.50%;
- Ni, in a mass fraction of 1.00 to 5.00%, preferably of 2.00 to 4.00%, preferably of 2.50 to 3.50%;
- Cu, in a mass fraction of 1.00 to 5.00%, preferably of 1.00 to 3,00%, preferably of 1.50 to 2.50%;
- optionally at least one element selected from: Hf, Cr, Ti, Er, W, Nb, Ta, Y, Yb, Nd, Ce, Co, Mo, Lu, Tm, V and/or mischmetal, in a mass fraction less than or equal to 5.00%, preferably less than or equal to 3.00% each, and less than or equal to 15.00%, preferably less than or equal to 12.00%, even more preferably less than or equal to 5.00 % in total;
- optionally at least one element selected from: Fe, Si, Mg, Zn, Sc, La, Sr, Ba, Sb, Bi, Ca, P, B, In and/or Sn, in a mass fraction less than or equal to 1.00%, preferably less than or equal to 0.50%, preferably less than or equal to 0.30%, more preferably less than or equal to 0.10%, even more preferably less than or equal to 700 ppm each, and less than or equal to 2.00%, preferably less than or equal to 1.00% in total;
- optionally at least one element selected from: Ag in a mass fraction of 0.06 to 1.00%, Li in a mass fraction of 0.06 to 1.00%;
- optionally impurities in a mass fraction less than 0.05% each (i.e., 500 ppm) and less than 0.15% in total;
- the remainder being aluminum.

2. Method for producing a part comprising the production of successive solid metallic layers (20₁...20ₙ), which are superimposed on each other, each layer describing a pattern defined using a digital model (*M*), each layer being produced by depositing a metal (25), called filler metal, the filler metal being subjected to a supply of energy so as to become molten and to constitute, upon solidifying, said layer, wherein the filler metal takes the form of a powder (25), the exposure of which to an energy beam (32) results in a melting followed by a solidification, so as to form a solid layer (20₁...20ₙ),
the method being **characterized in that** the filler metal (25) is an aluminum alloy comprising at least the following alloy elements:
- Zr and at least one element selected from: Ti, V, Sc, Hf, Er, Tm, Yb and Lu, in a mass fraction of 0.60 to 1.40%, preferably of 0.70 to 1.30%, preferably of 0.80 to 1.20%, more preferably of 0.85 to 1.15%; even more preferably of 0.90 to 1.10% in total, in the knowledge that Zr represents from 10 to less than 100% of the percentage ranges given hereinabove;
- Mn, in a mass fraction of 2.00 to 5.00%, preferably of 3.00 to 5.00%, preferably of 3.50 to 4.50%;
- Ni, in a mass fraction of 1.00 to 5.00%, preferably of 2.00 to 4.00%, preferably of 2.50 to 3.50%;
- Cu, in a mass fraction of 1.00 to 5.00%, preferably of 1.00 to 3,00%, preferably of 1.50 to 2.50%;
- optionally at least one element selected from: Cr, W, Nb, Ta, Y, Nd, Ce, Co, Mo and/or mischmetal, in a mass fraction less than or equal to 5.00%, preferably less than or equal to 3.00% each, and less than or equal to 15.00%, preferably less than or equal to 12.00%, even more preferably less than or equal to 5.00 % in total;
- optionally at least one element selected from: Fe, Si, Mg, Zn, La, Sr, Ba, Sb, Bi, Ca, P, B, In and/or Sn, in a mass fraction less than or equal to 1.00%, preferably less than or equal to 0.50%, preferably less than or equal to 0.30%, more preferably less than or equal to 0.10%, even more preferably less than or equal to 700 ppm each, and less than or equal to 2.00%, preferably less than or equal to 1.00% in total;
- optionally at least one element selected from: Ag in a mass fraction of 0.06 to 1.00%, Li in a mass fraction of 0.06 to 1.00%;
- optionally impurities in a mass fraction less than 0.05% each (i.e., 500 ppm) and less than 0.15% in total;
- the remainder being aluminum.

3. Method according to any one of the preceding claims, wherein the addition of La, Bi, Mg, Er, Yb, Y, Sc and/or Zn is avoided, the preferred mass fraction of each of these elements then being less than 0.05%, and preferably less than 0.01%.

4. Method according to any one of the preceding claims, wherein the aluminum alloy also comprises at least one element to refine the grains, for example AlTiC or AlTiB2, according to a quantity less than or equal to 50 kg/ton, preferably less than or equal to 20 kg/ton, even more preferably less than or equal to 12 kg/ton each, and less than or equal to 50 kg/ton, preferably less than or equal to 20 kg/ton in total.

5. Method according to any one of the preceding claims, including, following the formation of the layers (20₁...20ₙ),
- a thermal treatment typically at a temperature of at least 100°C and at most 500°C, preferably from 300 to 450°C; and/or,
- a hot isostatic compression.

6. Method according to any one of the preceding claims wherein the part is manufactured either at a temperature from 25 to 150°C, preferably from 50 to 130°C, preferably from 80 to 110°C, or at a temperature from more than 250 to less than 350°C, preferably from 280 to 330°C.

7. Metal part obtained by a method according to any one of claims 1 to 6.

8. Powder comprising an aluminum alloy comprising at least the following alloy elements;
- Zr, in a mass fraction of 0.60 to 1.40%, preferably of 0.70 to 1.30%, preferably of 0.80 to 1.20%, more preferably of 0.85 to 1.15%; even more preferably of 0.90 to 1.10%;
- Mn, in a mass fraction of 2.00 to 5.00%, preferably of 3.00 to 5.00%, preferably of 3.50 to 4.50%;
- Ni, in a mass fraction of 1.00 to 5.00%, preferably of 2.00 to 4.00%, preferably of 2.50 to 3.50%;
- Cu, in a mass fraction of 1.00 to 5.00%, preferably of 1.00 to 3,00%, preferably of 1.50 to 2.50%;
- optionally at least one element selected from: Hf, Cr, Ti, Er, W, Nb, Ta, Y, Yb, Nd, Ce, Co, Mo, Lu, Tm, V and/or mischmetal, in a mass fraction less than or equal to 5.00%, preferably less than or equal to 3.00% each, and less than or equal to 15.00%, preferably less than or equal to 12.00%, even more preferably less than or equal to 5.00 % in total;
- optionally at least one element selected from: Fe, Si, Mg, Zn, Sc, La, Sr, Ba, Sb, Bi, Ca, P, B, In and/or Sn, in a mass fraction less than or equal to 1.00 %, preferably less than or equal to 0.50%, preferably less than or equal to 0.30%, more preferably less than or equal to 0.10%, even more preferably less than or equal to 700 ppm each, and less than or equal to 2.00%, preferably less than or equal to 1.00% in total;
- optionally at least one element selected from: Ag in a mass fraction of 0.06 to 1.00%, Li in a mass fraction of 0.06 to 1.00%;
- optionally impurities in a mass fraction less than 0.05% each (i.e. 500 ppm) and less than 0.15% in total;
- the remainder being aluminum.

9. Powder comprising an aluminum alloy comprising at least the following alloy elements;
- Zr and at least one element selected from: Ti, V, Sc, Hf, Er, Tm, Yb and Lu, in a mass fraction of 0.60 to 1.40%, preferably of 0.70 to 1.30%, preferably of 0.80 to 1.20%, more preferably of 0.85 to 1.15%; even more preferably of 0.90 to 1.10% in total, in the knowledge that Zr represents from 10 to less than 100% of the percentage ranges given hereinabove;
- Mn, in a mass fraction of 2.00 to 5.00%, preferably of 3.00 to 5.00%, preferably of 3.50 to 4.50%;
- Ni, in a mass fraction of 1.00 to 5.00%, preferably of 2.00 to 4.00%, preferably of 2.50 to 3.50%;
- Cu, in a mass fraction of 1.00 to 5.00%, preferably of 1.00 to 3,00%, preferably of 1.50 to 2.50%:
- optionally at least one element selected from: Cr, W, Nb, Ta, Y, Nd, Ce, Co, Mo and/or mischmetal, in a mass fraction less than or equal to 5.00%, preferably less than or equal to 3.00% each, and less than or equal to 15.00%, preferably less than or equal to 12.00%, even more preferably less than or equal to 5.00% in total;
- optionally at least one element selected from Fe, Si, Mg, Zn, La, Sr, Ba, Sb, Bi, Ca, P, B, In and/or Sn, in a mass fraction less than or equal to 1.00%, preferably less than or equal to 0.50%, preferably less than or equal to 0.30%, more preferably less than or equal to 0.10%, even more preferably less than or equal to 700 ppm each, and less than or equal to 2.00%, preferably less than or equal to 1.00% in total;
- optionally at least one element selected from: Ag in a mass fraction of 0.06 to 1.00%, Li in a mass fraction of 0.06 to 1.00%;
- optionally impurities in a mass fraction less than 0.05% each (i.e., 500 ppm) and less than 0.15% in total;
- the remainder being aluminum.
